# EUROPEAN PATENT SPECIFICATION

(11) **EP 2 570 313 B1**
(45) Date of publication and mention of the grant of the patent: **30.04.2014**
(21) Application number: 12182984.0
(22) Date of filing: 04.09.2012
(51) Int. Cl.: B60T 7/04, B60T 7/12

(54) **Method, and a regulating device, pertaining to activation of the hill-hold function for a vehicle**
Verfahren und Regelungsvorrichtung im Zusammenhang mit der Aktivierung der Berganfahrhilfe für Fahrzeuge
Procédé et dispositif de régulation relatifs à l'activation de la fonction d'aide au démarrage en côté pour véhicule

(30) Priority: 16.09.2011 SE 1150846
(43) Date of publication of application: 20.03.2013
(73) Proprietor: Scania CV AB, 151 87 Södertälje (SE)
(72) Inventor: Dillman, Martin, SE-111 38 Stockholm (SE)

(56) References cited:
- DE-A1- 19 950 162
- US-A- 5 979 619
- US-A1- 2009 298 642

## Description

### Field of the invention

The present invention relates to a method and a device according to the preambles of the independent claims.

### Background to the invention

In older vehicles with compressed air brake systems there is substantial delay from when the driver releases a strongly depressed brake pedal to when the brake linings move away from the brake drum. This makes it possible, if the vehicle is on an upgrade, to press the brake pedal hard, release it quickly and reach the tractive state of the clutch before the vehicle can begin to roll backwards.

On modem vehicles, the brake linings respond to the position of the brake pedal much more quickly. A so-called "hill-hold" function enables the driver to use a switch on the dashboard to activate a function which causes the vehicle each time to maintain a certain braking force after the pedal has been released. The vehicle thus remains stationary on the upgrade and the brake releases automatically when the tractive position of the clutch pedal is detected or a predetermined time has elapsed.

The way the hill-hold function currently works is that if it is activated and the brake pedal is depressed it is then possible to release the brake but still have braking action. In one variant an alarm signal is delivered after 5 seconds and if no tractive state is identified the braking action ceases. This is because the function is not usable as a parking brake.

A switch to activate the hill-hold function is therefore needed, which means that the driver cannot easily choose in each individual case whether to activate the hill-hold function.

If for example vehicle has halted on a downgrade and the hill-hold function is activated, it is not possible to cause the vehicle to roll forwards by merely releasing the brake pedal.

US-2009298642 refers to a system for preventing a vehicle from rolling rearwards when being set in motion on an upgrade. One variant enables the system to be activated when the brake pedal is depressed for an extra-long time.

The object of the present invention is to propose an improved activation of the hill-hold function which is better suited to the driver's wishes.

### Summary of the invention

The above objects are achieved with the invention defined by the independent claims.

Preferred embodiments are defined by the dependent claims.

The invention is applicable on trucks and buses but also on cars.

The invention may for example be implemented as a new software function in the brake system. The function works by the following logic.

If the vehicle's speed is zero and the brake pedal is depressed, preferably from a position which has for some time been stable to a lower position, and is then released completely, the hill-hold function is activated. The time for which the hill-hold function is active may for example be proportional to how long the driver keeps the pedal depressed in the lower position.

The present invention affords a number of advantages:
No switch is needed for choosing the hill-hold function, with consequent savings of cost and space.

If the driver brings the vehicle to a halt on a downgrade or is for some other reason unwilling, in the current situation, to use the hill-hold function, there is no need to use the switch to turn the function off.

Each time the vehicle is set in motion on an upgrade it is possible to decide whether or not to have extra time to reach the tractive state, and if so how much.

According to the present invention, the hill-hold function is thus activated by the brake pedal and should never be active for more than perhaps 3-5 seconds, which is the maximum time potentially required to reach the tractive state on an upgrade. Some scenarios are described below:
- Moving off on steep upgrade - Before releasing the brake, the driver first depresses it extra far, keeps it there for 3 seconds and then releases it, whereupon the hill-hold function is activated and releases after 3 seconds or when a tractive state is detected.
- Moving off on gentle upgrade - Before releasing the brake, the driver first depresses it extra far, keeps it there for 1 second and then releases it, whereupon the hill-hold function is activated and releases after 1 second or when a tractive state is detected.

In one embodiment the hill-hold function is activated in such a way that the time for which it is active is proportional to how far the brake pedal is depressed beyond the position at which it is when the vehicle is stationary and not to how long a time it is kept in that position. If for example the driver keeps the vehicle stationary on an upgrade by slight pressure on the brake pedal - resulting in a green light - he/she then depresses the pedal quickly all the way and releases it immediately, with the result that the hill-hold function is activated for 3 seconds and the driver can reach the tractive state. If he/she depressed the pedal only halfway, the hill-hold function would for example be activated for 1.5 seconds.

Further features and advantages of the invention are indicated by the attached description exemplifying a number of different embodiments of the invention.

### Brief description of drawings

Figure 1 is a block diagram schematically illustrating the present invention.
Figure 2 is a schematic diagram of a brake pedal to illustrate an embodiment of the present invention.
Figure 3 is a flowchart illustrating the present invention.
Figure 4 is a block diagram schematically illustrating an embodiment of the present invention.
Figure 5 is a flowchart illustrating an embodiment of the present invention.

### Detailed description of preferred embodiments of the invention

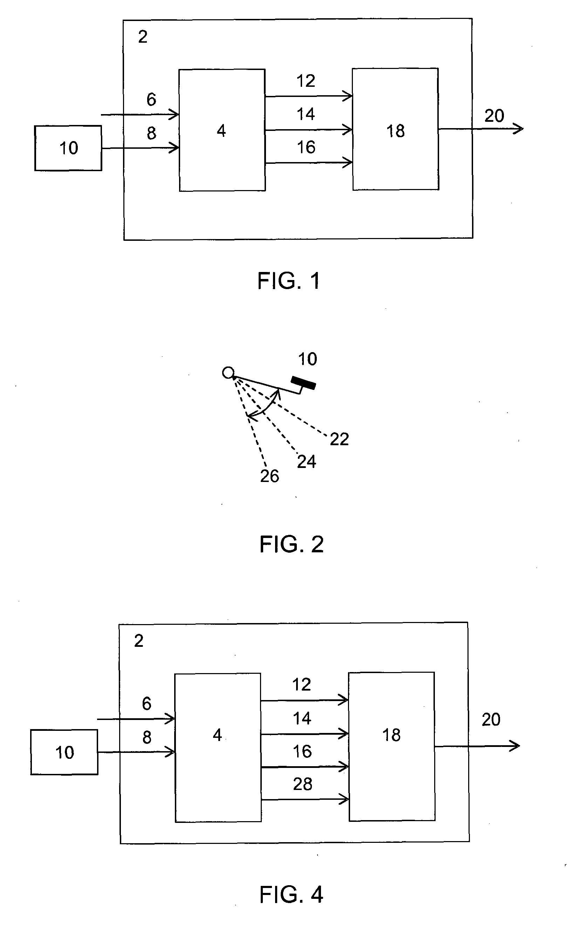

Figure 1 is a block diagram schematically illustrating the present invention.

The invention thus relates to a regulating device 2 for activating a hill-hold function for a vehicle whereby, as discussed above, when the vehicle is stationary, braking is applied until a tractive state of the vehicle is detected or a predetermined activation time has elapsed. The predetermined activation time is preferably within the range 1-5 seconds. The regulating device is preferably implemented in software which cooperates with other regulating systems for the vehicle. It may also be implemented as a separate physical module.

The regulating device 2 comprises an analysis unit 4 and a regulating unit 18, the analysis unit being adapted to receiving a speed signal 6 indicating the vehicle's speed and a position signal 8 containing information about the depression of the vehicle's brake pedal 10 with regard to its position and/or the duration of its depression. These signals and this information are already available on board the vehicle, so there will be no further description here of how they are measured and determined.

The analysis unit 4 is adapted to delivering a first output signal 12 if the vehicle's speed is zero, to delivering a second output signal 14 if the depression of the brake pedal 10 fulfils at least one predetermined activation criterion, and to delivering a third output signal 16 if the brake pedal is in a fully released state, after said activation criterion has been fulfilled. Said first, second and third output signals 12, 14, 16 are arranged to be conveyed to said regulating unit 18, which is adapted to delivering an activation signal 20 to activate the vehicle's hill-hold function if these signals are received.

There are according to the invention two substantially different ways of activating the hill-hold function, defined by respective first and second embodiments.

In the first embodiment illustrated schematically by Figure 2, the function is activated by depressing the brake pedal 10 beyond a predetermined holding position 22 at which the vehicle is braked.

The holding position is not necessarily a fixed position but may correspond to a depression of the brake pedal which renders the vehicle stationary in prevailing circumstances. This means that the holding position differs depending on whether the vehicle comes to a halt on an upgrade, in a level situation or on a downgrade.

The previously mentioned activation criterion (or criteria) comprises one or more activation positions 24, 26 which represent different depressions of the vehicle's brake pedal beyond the holding position 22 and each correspond to a predetermined activation time for the hill-hold function.

In one variant, the activation criterion comprises a first activation position 24 which is 40-60% beyond the holding position. This first activation position corresponds preferably to a predetermined first activation time within the range 1.0-2.0 seconds. If there is only one activation position, it may have a longer activation time, within for example the range 2.5-4.0 seconds, e.g. 3 seconds.

In another variant, the activation criteria comprise two activation positions, viz. a first position 24 which is 40-60%, and a second position 26 which is 80-100%, beyond the holding position.

In this variant the first activation position 24 corresponds to a predetermined first activation time within for example the range 1.0-2.0 seconds, and the second activation position 26 to a predetermined second activation time within for example the range 2.5-4.0 seconds.

It is also possible to have a continuous relationship between activation position and activation time. This would mean that when the brake pedal is depressed beyond a first activation position it corresponds to the shortest activation time, and the further it is depressed (and then released) the longer the activation time. Maximum depression, 100% beyond the holding position, then corresponds to the longest activation time, e.g. 5 seconds.

In the second embodiment, the analysis unit 4 is adapted to measuring how long the brake pedal is in a predetermined activation position which represents a depression beyond the holding position. The predetermined activation position may for example correspond to the first activation position discussed in relation to the first embodiment and represent a depression of the order of 40-60% beyond the holding position. A depression time is then determined which depends on the measured time, i.e. the time for which the pedal is kept in a depressed state, e.g. in the first activation position, and the activation time for the hill-hold function is related to this depression time.

The activation time may for example depend directly on the depression time in such a way that it is the same number of seconds as the depression time. There is preferably a maximum for the activation time, which means that if the brake pedal is kept depressed for longer than this maximum time, the hill-hold function is activated for the maximum time, which may for example be 5 seconds.

It is also possible to have other relationships between the depression time and the activation time. The activation time may for example be a factor of two longer than the depression time, in which case a depression for one second results in an activation time of two seconds.

In both embodiments, the brake pedal has to be fully released to enable the hill-hold function to be activated. The brake pedal is deemed to be in a released state if it is in such a state within a period of time which is shorter than a predetermined period after said activation criterion has been fulfilled, preferably shorter than one second.

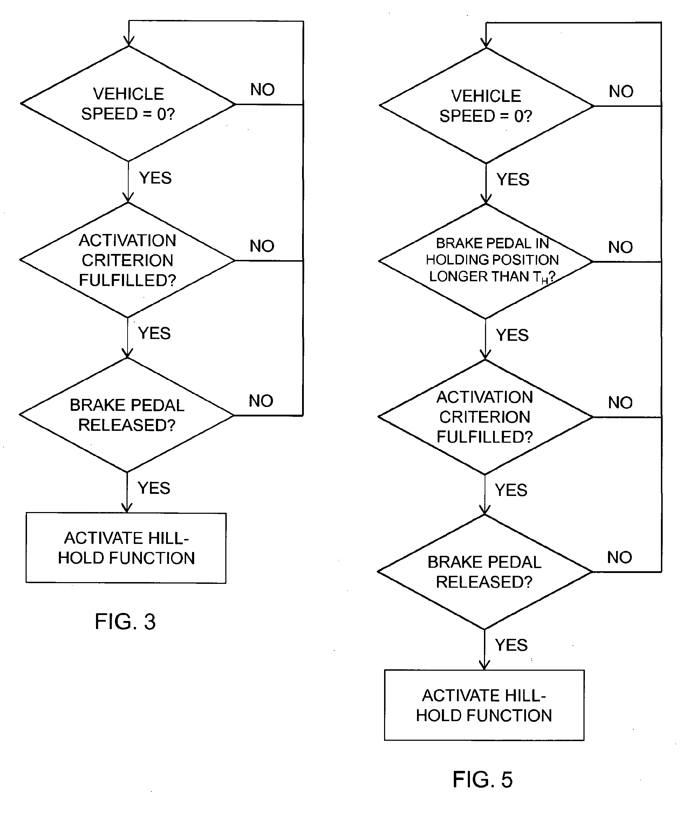

The invention comprises also a method for activation of a hill-hold function for a vehicle whereby, when the vehicle is stationary, braking is applied until a tractive state of the vehicle is detected or a predetermined activation time has elapsed. The method will now be described with reference to the flowchart in Figure 3.

The method comprises the steps of
- detecting the vehicle's speed,
- detecting the depression of its brake pedal with regard to its position and/or the duration of its depression,
- detecting that the brake pedal is in a released state,
whereupon the hill-hold function is activated if
- the vehicle's speed is substantially zero,
- at least one predetermined activation criterion related to the depression of the brake pedal is fulfilled,
- the brake pedal is in a fully released state after said activation criterion has been fulfilled.

These three conditions are checked, as illustrated in Figure 3, and if all of them are fulfilled the hill-hold function is activated for the predetermined activation time.

As previously described in relation to the regulating device, the vehicle brake has a predetermined holding position in which the vehicle is braked, and said activation criterion comprises one or more activation positions which represent different depressions of the brake pedal beyond said holding position.

The two embodiments described above in relation to the regulating device have their corresponding embodiments for the method.

In the first embodiment of the method, each activation position corresponds to a predetermined activation time for the hill-hold function. The activation criteria comprise in a first variant of the method a first activation position which is for example 40-60% beyond the holding position. The first activation position may of course correspond to depressing the pedal to the maximum beyond the holding position, i.e. up to 100%. The first activation position represents for example a predetermined first activation time within the range 1.0-2.0 seconds. A higher value of not more than 5 seconds may also be adopted.

In a second variant, said activation criteria comprise two activation positions, viz. a first activation position 40-60%, and a second activation position 80-100%, beyond said holding position. The first activation position then represents for example a predetermined first activation time within the range 1.0-2.0 seconds and a predetermined second activation time within the range 2.5-4.0 seconds.

In a second embodiment of the method the time for which the brake pedal is in the first activation position is measured and a depression time is determined on the basis of the measured time such that the activation time for the hill-hold function is related to the measured depression time.

The activation time may for example depend directly on the depression time in such a way that it is the same number of seconds as the depression time, or may bear some other relation to the depression time as discussed above when describing the regulating device.

In both embodiments of the method the brake pedal is deemed to be in a released state if it is in such a state within a period of time which is shorter than a predetermined period after said activation criterion has been fulfilled, preferably shorter than one second.

In an embodiment of the invention which is applicable for all the embodiments described above, a measurement is made of the time for which the brake pedal is kept in the holding position before being depressed to an activation position. In this embodiment the brake pedal has to be kept depressed at the holding position for longer than a predetermined time threshold value T_{H} to enable activation of the hill-hold function. This predetermined threshold value T_{H} is preferably 1-3 seconds. This embodiment is illustrated by the block diagram in Figure 4 and the block diagram in Figure 5.

Thus with reference to Figure 4 the analysis unit 4 is adapted to delivering a first output signal 12 if the vehicle's speed is zero, to delivering a fourth output signal 28 if the brake pedal is kept depressed for longer than T_{H}, to delivering a second output signal 14 if the brake pedal's depression fulfils at least one predetermined activation criterion, and to delivering a third output signal 16 if the brake pedal is in a fully released state, after said activation criterion has been fulfilled.

Said first, second, third and fourth output signals 12, 14, 16, 28 are arranged to be conveyed to said regulating unit 18, which is adapted to delivering an activation signal to activate the hill-hold function if these signals are received.

For further description of this embodiment, please refer to the above description of embodiments with reference to Figures 1 and 2.

Figure 5 is a flowchart of an embodiment in which the time for which the pedal is kept depressed is also measured and is compared with a predetermined threshold value T_{H}, and if it is longer than this value, the method is conducted as previously described in the description of the method according to the invention.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A method for activation of a hill-hold function for a vehicle whereby, when the vehicle is stationary, braking is applied until a tractive state of the vehicle is detected or a predetermined activation time has elapsed, which method comprises the steps of
- detecting the vehicle's speed,
- detecting depression of its brake pedal with regard to its position and/or the duration of its depression,
- detecting that the brake pedal is in a released state,
whereupon the hill-hold function is activated if
- the vehicle's speed is substantially zero,
- at least one predetermined activation criterion related to the depression of the brake pedal is fulfilled,
- the brake pedal is in a fully released state, after said activation criterion has been fulfilled,
**characterised**
**in that** the vehicle brake has a predetermined holding position at which the vehicle is braked, and that said activation criterion comprises one or more activation positions which represent one depression or more different depressions of the vehicle's brake pedal beyond said holding position, which method comprises measuring the time for which the brake pedal is in any one of said activation positions and determining a depression time on the basis of the measured time, the activation time for the hill-hold function being related to said depression time.

2. The method according to claim 1, in which said activation criteria comprise a first activation position which is 40-60% beyond said holding position.

3. The method according to claim 1 or 2, in which the activation time depends directly on said depression time in such a way that the activation time is the same number of seconds as the depression time.

4. The method according to any one of claims 1-3, in which a further condition for the hill-hold function to be activated is that the brake pedal be kept in the holding position for longer than a predetermined threshold value T_{H} before being depressed to said activation position.

5. The method according to any one of claims 1-4, in which the vehicle's brake pedal is deemed to be in a released state if it is in such a state within a period of time which is shorter than a predetermined period after said activation criterion has been fulfilled.

6. A regulating device (2) for activation of a hill-hold function for a vehicle whereby, as discussed above, when the vehicle is stationary, braking is applied until a tractive state of the vehicle is detected or a predetermined activation time has elapsed, which regulating device (2) comprises an analysis unit (4) and a regulating unit (18), the analysis unit being adapted to receiving a speed signal (6) indicating the vehicle's speed and a position signal (8) containing information about the depression of the vehicle's brake pedal (10) with regard to its position and/or the duration of its depression, which analysis unit (4) is adapted to delivering a first output signal (12) if the vehicle's speed is zero, to delivering a second output signal (14) if the depression of the brake pedal (10) fulfils at least one predetermined activation criterion, and to delivering a third output signal (16) if the brake pedal (10) is in a fully released state, after said activation criterion has been fulfilled, said first, second and third output signals (12, 14, 16) being arranged to be conveyed to said regulating unit (18), which is adapted to delivering an activation signal (20) to activate the vehicle's hill-hold function if these signals are received, **characterised in that** vehicle brake has a predetermined holding position (22) at which the vehicle is braked, and that said activation criterion comprises one or more activation positions (24, 26) which represent one depression or more different depressions of the vehicle's brake pedal beyond said holding position (22), the analysis unit (4) being adapted to measuring the time for which the brake pedal is in said activation position and to determining a depression time which depends on the time measured, the activation time for the hill-hold function being related to said depression time.

7. The regulating device according to claim 6, in which said activation criteria comprise a first activation position which is 40-60% beyond said holding position.

8. The regulating device according to claim 6 or 7, in which the activation time depends directly on said depression time in such a way that the activation time is the same number of seconds as the depression time.

9. The regulating device according to any one of claims 6-8 in which the analysis unit (4) is adapted to also delivering a fourth output signal (28) if the brake pedal is kept depressed for longer than a predetermined time T_{H} before being depressed to said activation position, and said fourth output signal (28) is arranged to be conveyed to said regulating device (18), which is adapted to delivering an activation signal (20) to activate the vehicle's hill-hold function if said first, second, third and fourth signals are received.

10. The regulating device according to any one of claims 6-9, in which the brake pedal is deemed to be in a released state if it is in such a state within a period of time which is shorter than a predetermined period after said activation criterion has been fulfilled.

## Patentansprüche

1. Verfahren zum Aktivieren einer Berganfahrhilfefunktion für ein Fahrzeug, wobei dann, wenn das Fahrzeug stillsteht, ein Bremsen angewandt wird, bis ein Traktionszustand des Fahrzeugs erfasst wird oder eine vorbestimmte Aktivierungszeit abgelaufen ist, wobei das Verfahren die folgenden Schritte umfasst:
- Erfassen der Geschwindigkeit des Fahrzeugs,
- Erfassen des Niederdrückens von dessen Bremspedal bezüglich dessen Position und/oder der Dauer von dessen Niederdrücken,
- Erfassen, dass sich das Bremspedal in einem gelösten Zustand befindet,
woraufhin die Berganfahrhilfefunktion aktiviert wird, wenn
- die Geschwindigkeit des Fahrzeugs im Wesentlichen Null beträgt,
- wenigstens ein vorbestimmtes Aktivierungskriterium im Zusammenhang mit dem Niederdrücken des Bremspedals erfüllt ist,
- das Bremspedal sich in einem vollständig gelösten Zustand befindet, nachdem das Aktivierungskriterium erfüllt wurde,
**dadurch gekennzeichnet, dass** die Fahrzeugbremse eine vorbestimmte Halteposition aufweist, in der das Fahrzeug gebremst wird, und dass das Aktivierungskriterium eine oder mehrere Aktivierungspositionen umfasst, die ein Niederdrücken oder mehrere verschiedene Niederdrückvorgänge des Bremspedals des Fahrzeugs über die Halteposition hinaus darstellen, wobei das Verfahren ein Messen der Zeit umfasst, in der das Bremspedal in einer der Aktivierungspositionen ist, und ein Bestimmen einer Niederdrückzeit basierend auf der gemessenen Zeit, wobei die Aktivierungszeit für die Berganfahrhilfefunktion mit der Niederdrückzeit zusammenhängt.

2. Verfahren gemäß Anspruch 1,
wobei das Aktivierungskriterium eine erste Aktivierungsposition umfasst, die 40-60% über der Haltposition hinaus liegt.

3. Verfahren gemäß Anspruch 1 oder 2,
wobei die Aktivierungszeit direkt von der Niederdrückzeit in derartiger Weise abhängt, dass die Aktivierungszeit die gleiche Anzahl von Sekunden beträgt wie die Niederdrückzeit.

4. Verfahren gemäß einem der Ansprüche 1 bis 3,
wobei eine weitere Bedingung für das Aktivieren der Berganfahrhilfefunktion darin besteht, dass das Bremspedal in der Halteposition länger als einen vorbestimmter Schwellenwert T_{H} gehalten wird, bevor es bis zu der Aktivierungsposition niedergedrückt wird.

5. Verfahren nach einem der Ansprüche 1 bis 4,
wobei das Bremspedal des Fahrzeugs als in einem gelösten Zustand befindlich erachtet wird, wenn es sich in einem solchen Zustand innerhalb einer Zeitdauer befindet,
die kürzer als eine vorbestimmte Zeitdauer ist, nachdem das Aktivierungskriterium erfüllt wurde.

6. Regelungsvorrichtung (2) zum Aktivieren einer Berganfahrhilfefunktion für ein Fahrzeug, wobei dann, wie vorstehend angegeben, wenn das Fahrzeug stillsteht, ein Bremsen angewandt wird, bis ein Traktionszustand des Fahrzeugs erfasst wird oder eine vorbestimmte Aktivierungszeit abgelaufen ist, wobei die Regelungsvorrichtung (2) eine Analyseeinheit (4) und eine Regelungseinheit (18) umfasst, wobei die Analyseeinheit dazu eingerichtet ist, ein Geschwindigkeitssignal (6) zu empfangen, das die Geschwindigkeit des Fahrzeugs anzeigt, und ein Positionssignal (8), das Informationen bezüglich des Niederdrückens des Bremspedals (10) des Fahrzeugs hinsichtlich dessen Position und/oder der Dauer von dessen Niederdrücken enthält, wobei die Analyseeinheit (4) dazu eingerichtet ist, ein erstes Ausgabesignal (12) auszugeben, wenn die Fahrzeuggeschwindigkeit Null beträgt, ein zweites Ausgabesignal (14) auszugeben, wenn das Niederdrücken des Bremspedals (10) wenigstens ein vorbestimmtes Aktivierungskriterium erfüllt, und ein drittes Ausgabesignal (16) auszugeben, wenn sich das Bremspedal (10) in einem vollständig gelösten Zustand befindet, nachdem das Aktivierungskriterium erfüllt worden ist, wobei die ersten, zweiten und dritten Ausgabesignale (12, 14, 16) dazu eingerichtet sind, zu der Regelungseinheit (18) übermittelt zu werden, die dazu eingerichtet ist, ein Aktivierungssignal (20) zum Aktivieren der Berganfahrhilfefunktion des Fahrzeugs auszugeben, wenn diese Signale empfangen werden,
**dadurch gekennzeichnet, dass** die Fahrzeugbremse eine vorbestimmte Halteposition (22) aufweist, in der das Fahrzeug gebremst wird, und dass das Aktivierungskriterium eine oder mehrere Aktivierungspositionen (24, 26) umfasst, die ein Niederdrücken oder mehrere verschiedene Niederdrückvorgänge des Bremspedals des Fahrzeugs über die Halteposition (22) hinaus umfassen, wobei die Analyseeinheit (4) dazu eingerichtet ist, die Zeit zu messen, in der das Bremspedal sich in der Aktivierungsposition befindet, und eine Niederdrückzeit zu bestimmen, die von der gemessenen Zeit abhängt, wobei die Aktivierungszeit für die Berganfahrhilfefunktion mit der Niederdrückzeit zusammenhängt.

7. Verfahren gemäß Anspruch 6,
wobei das Aktivierungskriterium eine erste Aktivierungsposition umfasst, die 40-60% über der Haltposition hinaus liegt.

8. Verfahren gemäß Anspruch 6 oder 7,
wobei die Aktivierungszeit direkt von der Niederdrückzeit in derartiger Weise abhängt, dass die Aktivierungszeit die gleiche Anzahl von Sekunden beträgt wie die Niederdrückzeit.

9. Verfahren gemäß einem der Ansprüche 6 bis 8,
wobei die Analyseeinheit (4) dazu eingerichtet ist, ebenso ein viertes Ausgabesignal (28) auszugeben, wenn das Bremspedal für länger als eine vorbestimmte Zeit T_{H} niedergedrückt wird, bevor es zu der Aktivierungsposition niedergedrückt wird, und wobei das vierte Ausgabesignal (28) dazu eingerichtet ist, an die Regelungsvorrichtung (18) übermittelt zu werden, die dazu eingerichtet ist, ein Aktivierungssignal (20) auszugeben, um die Berganfahrhilfefunktion des Fahrzeugs zu aktiveren, wenn das erste, zweite, dritte und vierte Signal erhalten werden.

10. Verfahren nach einem der Ansprüche 6 bis 9,
wobei das Bremspedal des Fahrzeugs als sich in einem gelösten Zustand befindlich erachtet wird, wenn es sich in einem solchen Zustand innerhalb von einer Zeitdauer befindet, die kürzer als eine vorbestimmte Zeitdauer ist, nachdem das Aktivierungskriterium erfüllt wurde.

## Revendications

1. Procédé d'activation d'une fonction d'aide au démarrage en côte pour un véhicule, dans lequel, lorsque le véhicule est à l'arrêt, un freinage est appliqué jusqu'à ce qu'un état de traction du véhicule soit détecté ou qu'un temps d'activation prédéterminé se soit écoulé, lequel procédé comprend les étapes consistant à :
- détecter la vitesse du véhicule,
- détecter l'enfoncement de sa pédale de frein, au regard de sa position et/ou de la durée de son enfoncement,
- détecter que la pédale de frein est dans un état relâché,
à la suite de quoi la fonction d'aide au démarrage en côte est activée si
- la vitesse du véhicule est sensiblement nulle,
- au moins un critère d'activation prédéterminé relatif à l'enfoncement de la pédale de frein est satisfait,
- la pédale de frein est dans un état entièrement relâché après que ledit critère d'activation a été satisfait,
**caractérisé**
**en ce que** le frein du véhicule a une position de retenue prédéterminée dans laquelle le véhicule est freiné, et en ce que ledit critère d'activation comprend une ou plusieurs positions d'activation qui représente(nt) un enfoncement ou plusieurs enfoncements différents de la pédale de frein du véhicule qui dépasse(nt) ladite position de retenue, lequel procédé comprend une mesure du temps pendant lequel la pédale de frein est dans une quelconque desdites positions d'activation et une détermination d'un temps d'enfoncement sur la base du temps mesuré, le temps d'activation de la fonction d'aide au démarrage en côte étant lié audit temps d'enfoncement.

2. Procédé selon la revendication 1, dans lequel lesdits critères d'activation comprennent une première position d'activation qui dépasse de 40 à 60 % ladite position de retenue.

3. Procédé selon la revendication 1 ou 2, dans lequel le temps d'activation dépend directement dudit temps d'enfoncement, de telle sorte que le temps d'activation est le même nombre de secondes que le temps d'enfoncement.

4. Procédé selon une quelconque des revendications 1 à 3, dans lequel une condition additionnelle pour que la fonction d'aide au démarrage en côte soit activée est que la pédale de frein soit maintenue dans la position de retenue pendant un temps plus long qu'une valeur seuil T_{H} prédéterminée avant d'être enfoncée jusqu'à ladite position d'activation.

5. Procédé selon une quelconque des revendications 1 - 4, dans lequel la pédale de frein du véhicule est considérée comme étant dans un état relâché si elle est dans cet état pendant une période de temps qui est plus courte qu'une période prédéterminée après que ledit critère d'activation a été satisfait.

6. Dispositif de régulation (2) pour l'activation d'une fonction d'aide au démarrage en côte pour un véhicule avec lequel, comme on l'a exposé plus haut, lorsque le véhicule est arrêté, le freinage est appliqué jusqu'à ce qu'un état de traction du véhicule soit détecté ou qu'un temps d'activation prédéterminé se soit écoulé, lequel dispositif de régulation (2) comprend une unité d'analyse (4) et une unité de régulation (18), l'unité d'analyse étant apte à recevoir un signal de vitesse (6) indiquant la vitesse du véhicule et un signal de position (8) contenant une information relative à l'enfoncement de la pédale de frein (10) du véhicule, au regard de sa position et/ou de la durée de son enfoncement, laquelle unité d'analyse (4) est apte à émettre un premier signal de sortie (12) si la vitesse du véhicule est nulle, à émettre un deuxième signal de sortie (14) si l'enfoncement de la pédale de frein (10) satisfait au moins un critère d'activation prédéterminé, et à émettre un troisième signal de sortie (16) si la pédale de frein (10) est dans un état entièrement relâché, après que ledit critère d'activation a été satisfait, ledit premier, ledit deuxième et ledit troisième signal de sortie (12, 14, 16) étant appropriés pour être transmis à ladite unité de régulation (18), laquelle est apte à émettre un signal d'activation (20) pour activer la fonction d'aide au démarrage en côte du véhicule si ces signaux sont reçus,
**caractérisé en ce que** ledit frein du véhicule a une position de retenue prédéterminée (22) dans laquelle le véhicule est freiné et **en ce que** ledit critère d'activation comprend une ou plusieurs positions d'activation (24, 26) qui représente(nt) un enfoncement ou plusieurs enfoncements différents de la pédale de frein du véhicule qui dépasse(nt) ladite position de retenue (22), l'unité d'analyse (4) étant apte à mesurer le temps pendant lequel la pédale de frein est dans ladite position d'activation et à déterminer un temps d'enfoncement qui dépend du temps mesuré, le temps d'activation de la fonction d'aide au démarrage en côte étant lié audit temps d'enfoncement.

7. Dispositif de régulation selon la revendication 6, dans lequel ledit critère d'activation comprend une première position d'activation qui dépasse de 40 à 60 % ladite position de retenue.

8. Dispositif de régulation selon la revendication 6 ou 7, dans lequel le temps d'activation dépend directement du temps d'enfoncement, de telle sorte que le temps d'activation a le même nombre de secondes que le temps d'enfoncement.

9. Dispositif de régulation selon une quelconque des revendications 6 à 8, dans lequel l'unité d'analyse (4) est apte à émettre aussi un quatrième signal de sortie (28) si la pédale de frein est maintenue enfoncée pendant plus longtemps qu'un temps prédéterminé T_{H} avant d'être enfoncée jusqu'à ladite position d'activation, et ledit quatrième signal de sortie (28) est adapté pour être transmis audit dispositif de régulation (18), lequel est apte à émettre un signal d'activation (20) pour activer la fonction d'aide au démarrage en côte du véhicule si ledit premier, ledit deuxième, ledit troisième et ledit quatrième signaux sont reçus.

10. Dispositif de régulation selon une quelconque des revendications 6 à 9, dans lequel la pédale de frein est considérée comme étant dans un état relâché si elle est dans cet état dans une période de temps qui est plus courte qu'une période prédéterminée après que ledit critère d'activation a été satisfait.
